# EUROPEAN PATENT APPLICATION

(11) **EP 3 424 880 A1**
(43) Date of publication of application: **09.01.2019**
(21) Application number: 17759435.5
(22) Date of filing: 17.01.2017
(51) Int. Cl.: C01B 32/30, B01J 23/58, C01B 32/336, C01C 1/04

(54) **ACTIVATED CARBON, METHOD FOR TREATING ACTIVATED CARBON, AMMONIA SYNTHESIS CATALYST, AND METHOD FOR PRODUCING AMMONIA SYNTHESIS CATALYST**

(30) Priority: 01.03.2016 JP 2016038992
(71) Applicant: Mitsubishi Heavy Industries Engineering, Ltd., Nishi-ku Yokohama-shi Kanagawa 220-8401 (JP)
(72) Inventor: TANAKA, Yukio, Tokyo 108-8215 (JP); YOSHIOKA, Hiroshi, Tokyo 108-8215 (JP); HIRAYAMA, Haruaki, Tokyo 108-8215 (JP)
(74) Representative: Studio Torta S.p.A.
(86) International application number: PCT/JP2017/001403
(87) International publication number: WO 2017/149963

(57) **Abstract**

Provided are activated carbon, a method for treating activated carbon, an ammonia synthesis catalyst, and a method for producing ammonia synthesis catalyst such that catalytic activity can be improved over the prior art. Activated carbon is activated by being subjected to heat treatment at a temperature of 800 to 1100°C for 10 to 50 hours in an inert gas into which oxygen is mixed in a concentration of 0.05 to 900 ppm, and the activated carbon is used to improve the catalytic activity of an ammonia synthesis catalyst.

## Description

### Technical Field

The present invention relates to an activated carbon, a method for treating activated carbon, an ammonia synthesis catalyst, and a method for producing ammonia synthesis catalyst.

### Background Art

Ammonia is a useful substance, such as a raw material for artificial fertilizer (ammonium sulfate or urea fertilizer). As for ammonia synthesis technique, one based on Haber-Bosch has been known for a long time. In this ammonia synthesis technique (Haber-Bosch method), ammonia is synthesized by reacting nitrogen and hydrogen in the presence of an iron catalyst.

In the ammonia synthesis technique starting with the Harbor-Bosch method, various active metals adopted as catalysts have been investigated and used.

A ruthenium catalyst using ruthenium as an active metal has been developed.

Regarding an ammonia synthesis catalyst, particularly a ruthenium catalyst, pretreatment has been performed on the activated carbon supporting ruthenium which is an active metal in order to modify its properties.

That is, as such a pre-treatment, it has been practiced to heat the activated carbon in a hydrogen atmosphere at a high temperature of about 900°C for about 50 to 500 hours to obtain a hydrogenated activated carbon (Patent Literature 1, Japanese Unexamined Patent Application No. 2001-246251).

However, further improvement of catalytic activity is required for a ruthenium catalyst as an ammonia synthesis catalyst.

### Patent Literature

[PTL 1] Japanese Unexamined Patent Application No. 2001-246251

### Summary of Invention

### Technical Problem

In view of the above circumstances, it is an object of the present invention to provide an activated carbon, a method for treating activated carbon, an ammonia synthesis catalyst, and a method for producing ammonia synthesis catalyst, which can improve the catalytic activity over the prior art.

### Solution to Problem

In order to solve the above problem, one aspect of the present invention is a method for treating activated carbon, in which an activated carbon is heated in an inert gas at a temperature of 800 to 1100°C for 10 to 50 hours, while the inert gas is obtained by mixing oxygen at a concentration of 0.05 to 900 ppm.

Another aspect of the present invention is an activated carbon obtained by the method for treating activated carbon according to the present invention.

Still another aspect of the present invention is a method for producing ammonia synthesis catalyst, which includes the method for treating activated carbon according to the present invention as a part of the process. That is, the method for producing ammonia synthesis catalyst according to the present invention includes an activated carbon activation step in which an activated carbon is heated in an inert gas at a temperature of 800 to 1100°C for 10 to 50 hours, the inert gas being obtained by mixing oxygen at a concentration of 0.05 to 900 ppm; a ruthenium supporting step in which ruthenium is supported on the activated carbon obtained in the activation step; and a promoter component supporting step in which alkali metal and/or alkali metal is supported on a catalyst precursor subjected to the ruthenium supporting step.

Still another aspect of the present invention is an ammonia synthesis catalyst, which is obtained by the method for producing ammonia synthesis catalyst according to the present invention.

### Advantageous Effects of Invention

According to the present invention, there is provided the activated carbon, the method for treating activated carbon, the ammonia synthesis catalyst, and the method for producing ammonia synthesis catalyst, which can improve the catalytic activity over the prior art.

### Description of Embodiments

Hereinafter, the activated carbon, a method for treating activated carbon, the ammonia synthesis catalyst, and the method for producing ammonia synthesis catalyst according to the present invention will be described with reference to embodiments.

### 1. Activated Carbon Activation Step

In one embodiment of the method for producing ammonia synthesis catalyst according to the present invention, an activated carbon for supporting ruthenium is activated by an activation step.

In the activation step, the activated carbon is heated in an inert gas at a temperature of 800 to 1,100°C for 10 to 50 hours. The inert gas is obtained by mixing oxygen at a concentration of 0.05 to 900 ppm.

As the activated carbon, one made of wood, coal, coconut shell or the like can be used as a raw material. It is preferable that a specific surface area of the activated carbon before treatment in the activation step is at least 800 m²/g or more.

As the activated carbon, one formed into a honeycomb shape can be used.

The inert gas that can be used in the present invention is a gas called precious gas or noble gas, and is a substance belonging to Group 18 of the periodic table such as helium (He), neon (Ne), argon (Ar).

The inert gas is prepared by mixing oxygen with an inert gas at a concentration of 0.05 to 900 ppm.

The activated carbon activation step adopted in the method for producing ammonia synthesis catalyst according to the present invention is also the method for treating activated carbon according to the present invention.

By carrying out the activated carbon activation step, a surface of the activated carbon is roughened, and the specific surface area substantially widens as illustrated in the examples described below.

It should be noted that "the surface is roughened" means a state in which irregularities are formed on the surface.

### 2. Ruthenium Supporting Step

Ruthenium is supported on the activated carbon obtained in the activation step.

As the ruthenium source, for example, an aqueous solution of water-soluble ruthenium compound can be used.

In case where the aqueous solution of water-soluble ruthenium compound is used, the activated carbon obtained in the activation step is immersed in the aqueous solution of water-soluble ruthenium compound to impregnate the activated carbon with the water-soluble ruthenium compound.

Examples of the water-soluble ruthenium compound that can be adopted include ruthenium nitrate, ruthenium chloride, and the like.

When the activated carbon is impregnated with the water-soluble ruthenium compound and ruthenium is supported, ruthenium is supported on the activated carbon by immersing the activated carbon in the ruthenium compound aqueous solution having a concentration of 1 to 40 g/L in terms of ruthenium and by carrying out evaporation to dryness.

As the ruthenium source, a carbonyl compound or a complex of ruthenium including Ru₃(CO)₁₂ can be used as well as the water-soluble compound.

### 3. Supporting Step of Alkali Metal and/or Alkaline Earth Metal

The ammonia synthesis catalyst according to the present invention may be one in which an alkali metal or an alkaline earth metal is supported on the activated carbon as well as ruthenium. That is, in the method for producing ammonia synthesis catalyst according to the present invention, a supporting step of alkali metal and/or alkaline earth metal can be carried out.

The alkali metal and/or alkaline earth metal is supported on the activated carbon as a promoter component.

In the supporting step of alkali metal and/or alkaline earth metal, the activated carbon supporting ruthenium compound is immersed in an aqueous solution of alkali metal and/or alkaline earth metal and subjected to evaporation to dryness, whereby the alkali metal and/or alkaline earth metal is supported on the activated carbon supporting ruthenium compound.

As the alkali metal- or alkaline earth metal-containing compound, water-soluble substances such as nitrates and acetates can be used as well as hydroxides.

### 4. Hydrogen Treatment Step

In the method for producing ammonia synthesis catalyst according to the present invention, a hydrogen treatment is performed on the activated carbon on which the ruthenium compound and the alkali metal and/or alkaline earth metal are supported.

After the activated carbon on which the ruthenium compound and the alkali metal and/or alkaline earth metal are supported is dried, the activated carbon is gradually heated up to about 450°C in an atmosphere of hydrogen or ammonia synthesis gas (hydrogen and nitrogen) and heated at about 450°C for 2 hours or more, preferably 3 to 5 hours.

The ammonia synthesis catalyst prepared through the aforementioned steps shows more ammonia synthesizing activity as compared with the conventional catalyst using activated carbon subjected to hydrogen treatment at 850°C for 48 hours or more.

### Example

Examples of the activated carbon, the method for treating activated carbon, the ammonia synthesis catalyst and the method for producing ammonia synthesis catalyst according to the present invention will be described in more detail below. The technical scope of the present invention is not limited by the following examples.

In a case where ammonia is synthesized using the ammonia synthesis catalyst according to the present invention, the ammonia synthesis catalyst is filled in a reactor of an ammonia synthesizer and ammonia synthesis is carried out. The reaction conditions at this time are generally as follows.

The reaction gas composition has a ratio of hydrogen to nitrogen preferably in the range of 1:3 to 4:1 (molar ratio).

The reaction temperature is preferably 300°C to 500°C.

The reaction pressure is preferably in the range of 10 to 30 MPaG.

### Example 1

### 1. Activated Carbon Activation Step

Oxygen was mixed with argon at a concentration of 0.1 ppm to prepare a gas constituting the treatment atmosphere.

Next, a molded activated carbon (specific surface area: 900 m²/g) made of coconut shell was heated in the gas prepared from argon at a temperature of 915°C for 18 hours.

The activated carbon was obtained.

### 2. Ruthenium Supporting Step

A ruthenium aqueous solution having a concentration of 9.2 g/L in terms of ruthenium was prepared. The activated carbon obtained in the activation step was immersed in the prepared ruthenium aqueous solution and subjected to evaporation to dryness at 140°C.

As a result, ruthenium was supported on the activated carbon.

### 3. Barium Supporting Step

The activated carbon supporting ruthenium was immersed in an aqueous solution of 50.8 g/L in terms of barium and subjected to evaporation to dryness.

### 4. Hydrogen Treatment Step

The activated carbon supporting ruthenium and barium was heated at 450°C for 1 hour under a nitrogen atmosphere. The heating rate up to the heat treatment temperature was set to 5°C/min.

Thus, the ammonia synthesis catalyst was obtained.

### Comparative Example 1

The following steps were carried out in place of the activated carbon activation step of Example 1.

N₂ ambient gas containing 3% H₂ was prepared.

In the same manner as in Example 1, a molded activated carbon (specific surface area: 900 m²/g) made of coconut shell was heated with 3% H₂/N₂ atmosphere gas at a temperature of 915°C for 18 hours.

Thereafter, the same steps 2 to 5 as in Example 1 were carried out to obtain the ammonia synthesis catalyst.

The reactor outlet ammonia concentration under the reaction conditions of 450°C and 19 MPa ·G was 22 vol% in a case of the ammonia synthesis catalyst obtained in Example 1 and 20 vol% in a case of the ammonia synthesis catalyst of Comparative Example 1.

Consequently, it is understood that the ammonia synthesis catalyst according to the present invention has improved ammonia synthesis activity. It is demonstrated that the improvement can be expected such that the activated carbon activation step increases the specific surface area.

## Claims

1. A method for treating activated carbon, comprising:
A step of heating an activated carbon in an inert gas at a temperature of 800 to 1100°C for 10 to 50 hours, the inert gas being obtained by mixing oxygen at a concentration of 0.05 to 900 ppm.

2. An activated carbon obtained by the method according to claim 1.

3. A method for producing an ammonia synthesis catalyst, comprising:
an activated carbon activation step in which an activated carbon is heated in an inert gas at a temperature of 800 to 1100°C for 10 to 50 hours, the inert gas being obtained by mixing oxygen at a concentration of 0.05 to 900 ppm;
a ruthenium supporting step in which ruthenium is supported on the activated carbon obtained in the activation step; and
a promoter component supporting step in which alkali metal and/or alkali metal is supported on a catalyst precursor subjected to the ruthenium supporting step.

4. An ammonia synthesis catalyst obtained by the method according to claim 3.
